Europäisches Patentamt

European Patent Office

Office européen des brevets

(11) Veröffentlichungsnummer: **0 183 157**
**B1**

(12) **EUROPÄISCHE PATENTSCHRIFT**

(45) Veröffentlichungstag der Patentschrift: **13.06.90**

(21) Anmeldenummer: **85114593.8**

(22) Anmeldetag: **16.11.85**

(51) Int. Cl.⁵: **F 23 N 1/02, G 01 L 15/00**

(54) **Gas/Luft-Verbundregler.**

(30) Priorität: **29.11.84 DE 3443533**

(43) Veröffentlichungstag der Anmeldung:
**04.06.86 Patentblatt 86/23**

(45) Bekanntmachung des Hinweises auf die
Patenterteilung:
**13.06.90 Patentblatt 90/24**

(84) Benannte Vertragsstaaten:
**AT BE CH FR GB IT LI NL SE**

(56) Entgegenhaltungen:
**FR-A-2 324 994**
**US-A-2 193 240**
**US-A-3 244 007**
**US-A-3 244 008**

(73) Patentinhaber: **Karl Dungs GmbH & Co.**
**D-7067 Urbach (DE)**

(72) Erfinder: **Dungs, Karl**
**Künkelinstrasse 52**
**D-7060 Schorndorf (DE)**
Erfinder: **Schmid, Hermann**
**Gerundweg 10**
**D-7067 Urbach (DE)**

(74) Vertreter: **Patentanwälte Kohler - Schwindling -**
**Späth**
**Hohentwielstrasse 41**
**D-7000 Stuttgart 1 (DE)**

Courier Press, Leamington Spa, England.

**Beschreibung**

Die Erfindung betrifft einen Gas/Luft-Verbundregler nach dem Oberbegriff des Patentanspruchs 1.

Aus US-A-2 193 240 ist ein Gas/Luft-Verbundregler für eine Gasfeuerungsanlage bekannt, bei dem zwischen zwei parallel zueinander angeordneten Hebeln, die jeweils mit der Membran eines mit der Gaszuleitung bzw. der Luftzuleitung verbundenen Druckmessers in Verbindung stehen, ein in Längsrichtung der Hebel verschiebbares Widerlager angeordnet ist. Die Stellung des Widerlagers wird von einer Nockenscheibe bestimmt, deren Stellung wiederum mittels eines Antriebes veränderbar ist, der auf das Ausgangssignal einer die Zusammensetzung des Gas/Luft-Gemisches überprüfenden kalorimetrischen Einrichtung anspricht.

Aus DE-A1-30 39 994 ist es bekannt, bei einer Gasfeuerungsanlage die Gasund Luftmengen unabhängig voneinander unter Berücksichtigung unterschiedlicher Betriebsbedingungen zu regeln. Hierzu können mechanische Regler mittels Kurvenscheiben oder aber Mikroprozessoren Verwendung finden, in denen in Abhängigkeit von unterschiedlichen Betriebsparametern optimale Einstellwerte für die Gas- und Luftmenge gespeichert sind. Solche Steuerungseinrichtungen sind außerordentlich aufwendig und nur für Großfeuerungsanlagen geeignet. Daher ist in vielen Fällen ein Gas/Luft-Verbundregler, wie er aus der US-A-2 193 240 bekannt ist, vorzuziehen.

Das verschiebbare Widerlager des aus der US-A-2 193 240 bekannten Gas/Luft-Verbundreglers ermöglicht durch ein Verändern des Übersetzungsverhältnisses zwischen den durch das Widerlager gekoppelten Hebeln eine entsprechende Veränderung und damit auch Einstellung des Gas/Luft-Verhältnisses. Der Nachteil dieser Anordnung besteht darin, daß insbesondere dann, wenn das Widerlager sich in seiner Grundstellung schon nahe dem Ende eines der beiden Hebel befindet, eine starke Variation des Übersetzungsverhältnisses und damit des Gas/Luft-Verhältnisses nicht mehr möglich ist, wenn diese Änderung eine Weiterverschiebung des Widerlagers in Richtung auf das Ende des einen Hebels erfordert. Es besteht jedoch ein Bedarf für einen Gas/Luft-Verbundregler, der ausgehend von einer für Normalbedingungen geltenden Grundstellung eine starke Variation des Übersetzungsverhältnisses und damit eine starke Variation des Gas/Luft-Verhältnisses in beiden Richtungen in Bezug auf die Grundeinstellung gestattet, ohne daß es dazu komplizierter Einrichtungen bedarf, wie sie etwa aus der DE-A1-30 39 994 bekannt sind.

Demgemäß liegt der Erfindung die Aufgabe zugrunde, einen Gas/Luft-Verbundregler der eingangs genannten Art so auszubilden, daß er eine solche, von der Grundeinstellung im wesentlichen unabhängige Variation des Gas/Luft-Verhältnisses in weiten Grenzen zuläßt.

Diese Aufgabe wird durch die Merkmale des kennzeichnenden Teiles des Anspruches 1 gelöst. Bei dem erfindungsgemäßen Gas/Luft-Verbundregler dient also das fest einstellbare Widerlager zum Einstellen des optimalen Gas/Luft-Verhältnisses bei Normalbedingungen. Bei dieser Einstellung kann sich das andere, mit dem motorischen Antrieb versehene Widerlager in seiner Mittelstellung befinden. Das andere Widerlager ermöglicht dann durch Verschieben aus seiner Mittelstellung heraus sowohl eine sehr starke Vergrößerung als auch Verkleinerung des Übersetzungsverhältnisses des Hebelwerkes und damit des durch das fest einstellbare Widerlager gewählten Gas/Luft-Verhältnisses für Normalbedingungen. Die Anwendung eines zusätzlichen Hebels und zusätzlichen Widerlagers bedeutet keinen erheblichen Mehraufwand, zumal die Trennung der Widerlager in ein fest einstellbares Widerlager und ein mit einem motorischen Antrieb versehenes Widerlager zu baulichen Vereinfachungen führt.

Bei einer bevorzugten Ausführungsform der Erfindung ist das fest einstellbare Widerlager an einem auf einem der Hebel verschiebbar gelagerten Schlitten angebracht, der mit einer parallel zum Hebel gelagerten Schraubspindel in Eingriff steht. Durch die Lagerung eines das Widerlager tragenden Schlittens am Hebel ergibt sich eine sehr stabile Anordnung des Widerlagers in Verbindung mit einer sehr feinfühligen Verstellbarkeit.

Das mit dem motorischen Antrieb versehene Widerlager kann vorteilhaft am Ende eines Armes angebracht sein, der an einem in Längsrichtung des Armes verschiebbar gelagerten Stellglied schwenkbar gelagert ist. Der besondere Vorteil dieser Anordnung besteht darin, daß der motorische Antrieb an einem geradlinig verschiebbaren Glied angreift und keinen anderen Bewegungen zu folgen braucht. Da für die Wirkung des Widerlagers nur seine Stellung in Bezug auf die durch das Widerlager gekoppelten Hebel von Bedeutung ist, spielt es keine Rolle, wie lang der Arm ist, an dem sich das Widerlager befindet, und wo dessen Schwenkpunkt angeordnet ist. Das gilt insbesondere dann, wenn das Widerlager von einer drehbar gelagerten Rolle gebildet wird, weil es dann wegen der kreisförmigen Umfangsfläche der Rollen auch nicht auf die Winkelstellung der Rollen in Bezug auf die anliegenden Hebel ankommt.

Bei einer bevorzugten Ausführungsform der Erfindung wird das Stellglied von einer verschiebbar gelagerten Zahnstange gebildet, mit der das Antriebsritzel eines Elektromotors in Eingriff steht. Außerdem steht mit der Zahnstange ein auf der Welle eines Potentiometers befestigtes Zahnrad in Eingriff. Das Potentiometer bildet einen die Stellung der Zahnstange und damit des Widerlagers anzeigenden Stellungsgeber. Ein solcher Stellungsgeber ist insbesondere dann erforderlich, wenn in Abhängigkeit von der Steuergröße, also beispielsweise dem Luftdruck oder dem Brennkammer-Gegendruck, eine Verschiebung des Widerlagers aus der Mittellage um einen bestimmten Betrag erforderlich ist.

Eine besonders gedrängte Bauweise des Gas/ Luft-Verbundreglers läßt sich in weiterer Ausgestaltung der Erfindung dadurch erzielen, daß der Zwischenhebel gabelförmig ausgebildet ist und neben den benachbarten Hebeln liegende Schenkel aufweist, an denen sich die seitlich der Hebel angeordneten Widerlager abstützen. Die gabelförmige Ausbildung des Zwischenhebels ermöglicht es, alle Hebel mit sehr geringem Abstand voneinander anzuordnen, weil bei einer starken Neigung der äußeren Hebel gegenüber dem Zwischenhebel die Enden der äußeren Hebel zwischen die Schenkel des Zwischenhebels eintreten können, sich die Hebel also überschneiden können.

Insbesondere dann, wenn die Widerlager von Rollen gebildet werden, denen an den Hebeln ebene Flächen als Laufbahnen gegenüberstehen, ist es vorteilhaft, wenn wenigstens einer der Hebel um eine zu seiner Längsrichtung im wesentlichen parallele Achse schwenkbar gelagert ist, weil er sich dann unter dem Einfluß der zu übertragenden Kräfte selbsttätig flach an den zylindrischen Umfang der Rolle anlegt.

Die Erfindung wird im folgenden anhand des in der Zeichnung dargestellten Ausführungsbeispieles näher beschrieben und erläutert. Die der Zeichnung und der Beschreibung zu entnehmenden Merkmale können bei anderen Ausführungsformen der Erfindung einzeln für sich oder zu mehreren in beliebiger Kombination Anwendung finden. Es zeigen

Fig. 1 eine schematische Darstellung einer gemäß der US-A-2 193 240 bekannten Gasfeuerungsanlage mit einer nach der Erfindung neuartigen Beaufschlagung des Ventils in der Gaszufuhrleitung,

Fig. 2 ein Diagramm, das die Einstellung unterschiedlicher Gas/Luft-Verhältnisse in Abhängigkeit von der Temperatur bei einer Gasfeuerungsanlage nach Fig. 1 veranschaulicht,

Fig. 3 einen Längsschnitt durch eine Ausführungsform eines erfindungsgemäßen Gas/Luft-Verbundreglers, der für den Einsatz in der Gasfeuerungsanlage nach Fig. 1 besonders geeignet ist, und

Fig. 4 bis 6 Schnitte längs der Linien IV-IV, V-V und VI-VI durch den Gas/Luft-Verbundregler nach nach Fig. 3.

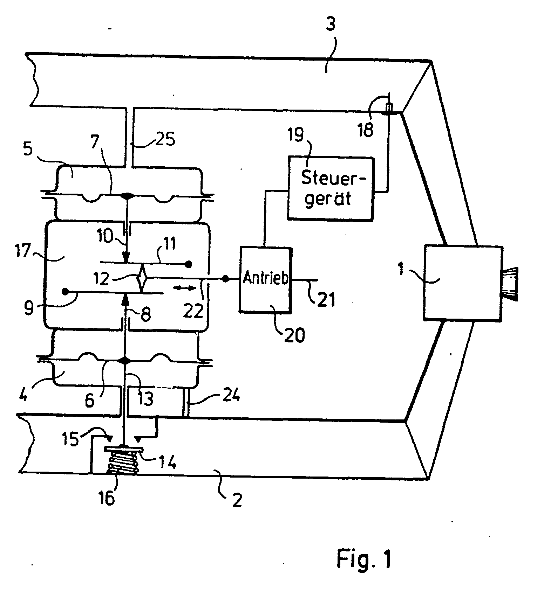

Die in Fig. 1 nur schematisch dargestellte, durch die US-A-2 193 240 bekannte Gasfeuerungsanlage umfaßt einen Brenner 1, an den eine Gaszuleitung 2 und eine Luftzuleitung 3 angeschlossen sind, und der eine neuartige Beaufschlagung eines Ventils in der Gaszufuhrleitung aufzeigt. Mit der Gaszuleitung 2 und der Luftzuleitung 3 steht jeweils ein Membran-Druckmesser 4 bzw. 5 über eine Leitung 24 bzw. 25 in der Weise in Verbindung, daß ihre Membranen 6 bzw. 7 an einander entgegengesetzten Seiten beaufschlagt werden. Mit der Membran 6 des Gas-Druckmessers 4 steht über einem Druckstift 8 ein Hebel 9 in Antriebsverbindung, der sich im wesentlichen parallel zur Membran 6 erstreckt. Entsprechend steht mit der Membran 7 des Luft-Druckmessers 5 über einen Druckstift 10 ein zweiter Hebel 11 in Antriebsverbindung, der sich ebenfalls im wesentlichen parallel zur Membran 7 des Luft-Druckmessers 5 und damit auch in seiner Mittelstellung parallel zum ersten Hebel 9 erstreckt. Die beiden in einer gemeinsamen Ebene im wesentlichen parallel zueinander angeordneten Hebel 9, 11 sind weiterhin durch ein Widerlager 12 miteinander gekoppelt, an dem die Hebel 9, 11 mit ihren den Druckstiften 8, 10 entgegengesetzten Seiten anliegen. Im Unterschied zu der Gasfeuerungsanlage gemäß der US-A-2 193 240 ist die Membran 6 des Gas-Druckmessers 4 außerdem an seiner dem Gasdruck ausgesetzten Seite mit einem Stößel 13 versehen, an dessen Ende sich das Verschlußstück 14 eines in der Gaszuleitung 2 angeordneten Ventiles 15 befindet. Das Verschlußstück 14 ist auf der dem Ventil 15 abgewandten Seite mit durch eine Schraubendruckfeder 16 belastet.

Die mit den Membranen 6, 7 der Druckmesser 4, 5 gekoppelten Hebel 9, 11 bilden zusammen mit dem Widerlager 12 ein Verhältnis-Einstellwerk 17. Die von dem in der Gaszuleitung 2 auf die Membran 6 und die von dem Druck in der Luftzuleitung 3 auf die Membran 7 ausgeübten Kräfte wirken in dem durch dieses Verhältnis-Einstellwerk 17 bestimmten Verhältnis gegeneinander. Dieses Verhältnis ist durch die Stellung des Widerlagers 12 zwischen den Hebeln 9 und 11 bestimmt, deren durch die Stellung des Widerlagers 12 definierten, relativen Längen ein durch Verschieben des Widerlagers veränderbares Übersetzungsverhältnis ergeben. Das Ventil 15 in der Gaszuleitung 2 ist offen, wenn der auf die Membran 7 des Luft-Druckmessers 5 wirkende Druck um einen durch das Übersetzungsverhältnis bestimmten Betrag größer ist als der auf die Membran 6 des Gas-Druckmessers 4 wirkende Druck und den Gegendruck der Schraubendruckfeder 16 überwindet. Das für eine bestimmte Gasfeuerungsanlage unter normalen Betriebsbedingungen optimale Druckverhältnis kann durch Verschieben des Widerlagers 12 eingestellt werden.

Die Normalbedingungen, bei denen die Einstellung des Widerlagers 12 stattfand, liegen jedoch nicht immer vor. Beispielsweise ist das optimale Gas/Luft-Verhältnis in hohem Maße von der Lufttemperatur abhängig. Die Lufttemperatur unterliegt erheblichen Schwankungen, so daß es sich als zweckmäßig erweist, das Gas/Luft-Verhältnis in Abhängigkeit von der Lufttemperatur zu modifizieren.

Die in Fig. 1 dargestellte Gasfeuerungeanlage bietet eine solche Möglichkeit. Sie umfaßt einen in der Gaszuleitung 3 angeordneten Temperaturfühler 18, der ein für die Lufttemperatur charakteristisches Signal einem Steuergerät 19 zuführt. Das Steuergerät 19 erzeugt ein von der Lufttemperatur abhängiges Ausgangssignal für einen Antrieb 20 für ein geradlinig verschiebbares Stellglied 21, an dessen dem Verhältnis-Einstellwerk 17 zugewandtes Ende ein Arm 22 angelenkt ist, an dessen freiem Ende sich das Widerlager 12 befindet. Nach der vom Temperaturfühler 18 gemessenen Temperatur bewirkt der Antrieb 20 ein Verschieben des Widerlagers 12 gegenüber dessen für Normalbedingungen gewählte Stellung, durch die das Gas/Luft-Verhältnis in der Weise verändert wird, daß auch bei von der Normaltemperatur abweichenden Lufttemperaturen das für eine optimale Verbrennung erforderliche Gas/Luft-Verhältnis eingestellt wird. Das Stellglied 21 überträgt zu diesem Zweck seine etwa parallel zu den Hebeln 9, 11 gerichtete Verschiebung über den Arm 22 auf das Widerlager 12, während die schwenkbare Verbindung zwischen Stellglied 21 und Arm 22 dem Widerlager 12 erlaubt, den Schwenkbewegungen der Hebel 9, 11 zu folgen.

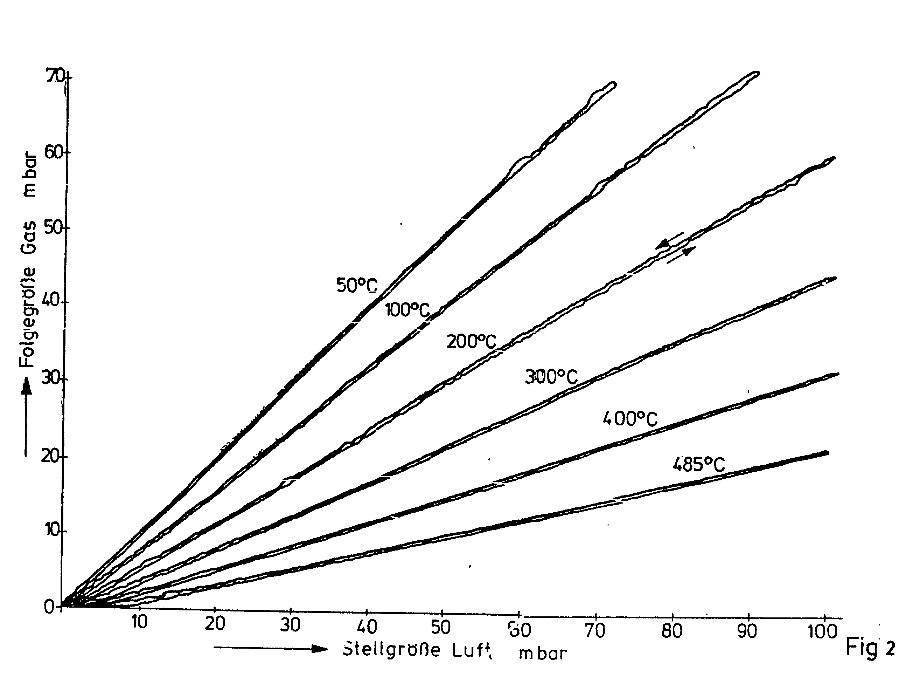

Fig. 2 veranschaulicht das Kennlinienfeld des Gas/Luft-Verbundreglers einer Gasfeuerungsanlage nach Fig. 1. Die verschiedenen, im wesentlichen geradlinigen Kurven entsprechen verschiedenen, durch die Stellung des Widerlagers bestimmten Gas/Luft-Verhältnissen für die an die einzelnen Kurven angeschriebenen Lufttemperaturen. Die den unterschiedlichen Temperaturen zugeordneten Verstellwege für das Widerlager werden auf übliche Weise mittels des Steuergerätes 19 bestimmt.

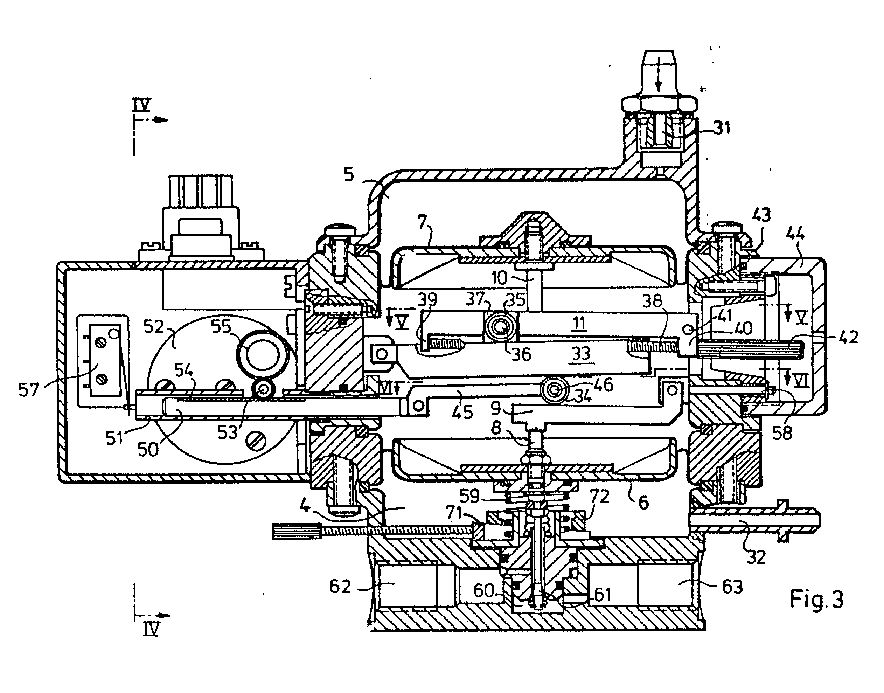

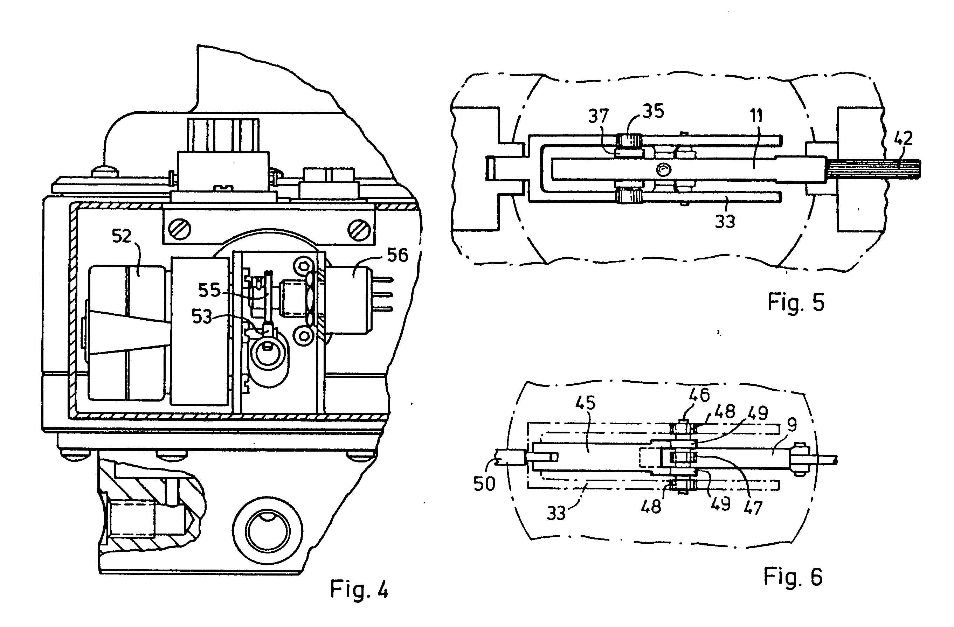

Die Fig. 3 bis 6 zeigen im einzelnen den Aufbau einer Ausführungsform des erfindungsgemäßen Gas/Luft-Verbundreglers, der für den Einsatz in einer Gasfeuerungsanlage, wie sie in Fig. 1 dargestellt ist, besonders geeignet ist. Der in den in Fig. 3 bis 6 dargestellte Gas/Luft-Verbundregler umfaßt zwei Membran-Druckmesser, nämlich einen Gas-Druckmesser 4 mit einer Membran 6 und einem Luft-Druckmesser 5 mit einer Membran 7. Die in Fig. 3 obere, durch die Membran 7 nach unten begrenzte Kammer des Luft-Druckmessers 5 ist mit einem Anschlußstutzen 31 versehen, der die Herstellung einer Verbindung zu der Luftzuleitung einer Gasfeuerungsanlage ermöglicht. Entsprechend ist auch die in Fig. 3 untere, durch die Membran 6 nach oben begrenzte Kammer des Gas-Druckmessers 4 mit einem Anschlußstutzen 32 versehen, der die Herstellung einer Verbindung zu der Gaszuleitung einer Gasfeuerungsanlage ermöglicht. Das zwischen den Membranen 6, 7 der beiden Membran-Druckmesser 4, 5 angeordnete Verhältnis-Einstellwerk umfaßt drei Hebel, nämlich den über einen Druckstift 8 mit der Membran 6 des Gas-Druckmessers 4 gekoppelten Hebel 9, den über einen Druckstift 10 mit der Membran 7 des Luft-Druckmessers 5 gekoppelten Hebel 11 und einen Zwischenhebel 33. Zwischen den paarweise einander entgegengesetzt gerichteten Hebeln befinden sich Widerlager 34 bzw. 35, die von Rollen gebildet werden. Die zwischen dem mit der Membran 7 des Luft-Druckmessers 5 verbundenen Hebel 11 un dem Zwischenhebel 33 angeordneten Rollen werden von kleinen Kugellagern gebildet, die auf Lagerzapfen 36 befestigt sind, welche von den Seitenflächen eines auf dem balkenförmigen Hebel 11 verschiebbar gelagerten Schlittens 37 abstehen. Der Schlitten 37 umgreift den Hebel 11 U-förmig und ist im Bereich seines Quersteges auf einer Schraubspindel 38 geführt, die in Ansätzen 39, 40, die sich an den Enden des Hebels 11 befinden, verdrehbar aber axial unverschiebbar gelagert ist. Die Schraubspindel 38 ragt über das Ende des Hebels 11, an dem dieser Hebel auf einem Zapfen 41 schwenkbar gelagert ist, hinaus und trägt dort einen Handgriff 42. Dieser Handgriff erlaubt es, durch Drehen der Gewindespindel 38 den Schlitten 37 mit dem Widerlager 35 in Längsrichtung des Hebels zu verschieben und damit das Übersetzungsverhältnis in Bezug auf den Zwischenhebel 33 zu verändern. Eine an der Außenseite des Gerätegehäuses 43 angebrachte Schutzkappe 44 schützt die Schraubspindel 38 mit dem Widerlager 35 vor unbeabsichtigter Verstellung.

Wie erwähnt, befinden sich die als Widerlager 35 dienenden Rollen zu beiden Seiten des Hebels 11, so daß auch der Zwischenhebel 33 zu beiden Seiten neben dem Hebel 11 liegende Laufflächen haben muß. Demgemäß ist der Zwischenhebel 33 gabelförmig ausgebildet, so daß der Hebel 11 zwischen die Schenkel des gabelförmigen Zwischenhebels 33 eingreifen kann. Auf diese Weise wird eine in der Höhe äußerst gedrängte Bauweise erzielt.

Das zwischen dem mit der Membran 6 des Gas-Druckmessers 4 gekoppelten Hebel 9 und dem Zwischenhebel 33 angeordnete Widerlager 34 befindet sich an dem Ende eines schwenkbar gelagerten Armes 45, dessen freies Ende wiederum gabelförmig ausgebildet ist und auf einem Lagerzapfen 46 drei Kugellager 47, 48 trägt, von denen das mittlere, zwischen den Schenkeln 49 der Gabel angeordnete Kugellager 47 auf dem Hebel 9 aufsitzt, während die außerhalb der Gabelschenkel 49 angeordneten Kugellager 48 an den Schenkeln des gabelförmigen Zwischenhebels 33 anliegen. Zum Verschieben des von den Kugellagern 47, 48 gebildeten Widerlagers 34 längs des Hebels 9 und des Zwischenhebels 33 dient ein Stellglied 50 in Form einer Zahnstange, die in einem gehäusefesten Rohr 51 in Richtung der Hebel verschiebbar, jedoch um ihre Achse unverdrehbar gelagert ist und an deren den Hebeln zugewandtem Ende der Arm 45 mit dem Widerlager 34 schwenkbar befestigt ist. Zum Antrieb der Zahnstange dient ein Elektromotor 52, auf dessen Abtriebswelle sich ein in die Zahnung 54 des Stellgliedes 50 eingreifendes Ritzel 53 befindet. Mit diesem Ritzel 53 und infolgedessen mittelbar auch mit dem Stellglied 50 steht weiterhin ein Zahnrad 55 in Eingriff, das sich auf der Antriebswelle eines Potentiometers 56 befindet. Mit dem Ende der Zahnstange wirkt ein Endschalter 57 zusammen, der den Verschiebeweg des Stellgliedes 50 begrenzt.

Der mit dem Gas-Druckmesser 4 zusammenwirkende Hebel 9 ist am Ende eines im Gehäuse 43 drehbar gelagerten Zapfens 58 schwenkbar gelagert, der sich im wesentlichen parallel zur Richtung des daran angelenkten Hebels 9 erstreckt. Die im wesentlichen um seine Längsachse schwenkbare Lagerung des Hebels 9 gewährleistet eine einwandfreie Anlage seiner Lauffläche an die Mantelfläche des als Rolle ausgebildeten Widerlagers 34.

Der in den Fig. 3 bis 6 dargestellte Gas/Luft-Verbundregler gestattet es, bei vorgegebener Null-Stellung des motorisch verstellbaren Widerlagers 34 mittels der Schraubspindel 38 das Widerlager 35 zwischen dem dem Luft-Druckmesser 5 zugeordneten Hebel 11 und dem Zwischenhebel 33 auf ein Gas/Luft-Verhältnis einzustellen, das für die Normalbedingungen einer Gasfeuerungsanlage optimal ist. Im übrigen entspricht die Wirkungsweise des beschriebenen Gas/Luft-Verbundreglers derjenigen der bekannten Gas/Luft-Verbundregler. Dem auf die Membran 6 wirkenden Gasdruck wirkt der auf die Membran 7 wirkende Luftdruck entsprechend dem am Verhältnis-Einstellwerk eingestellten Übersetzungsverhältnis entgegen. Die von den druckbelasteten Membranen 6, 7 ausgeübten Kräfte haben eine Resultierende, die zu einem Öffnen des unterhalb der Gas-Membran 6 angeordneten Steuerventils führt, dessen Stößel 61 mit der Membran 6 verbunden ist, wenn die Resultierende der Kräfte die Gegenkraft einer die Membran 6 des Gas-Druckmessers 4 belastenden Schraubendruckfeder 59 überschreitet. Die Kraft der Schraubendruckfeder 59 muß so bemessen sein, daß sie bei der gewählten Grundeinstellung des Verhältnis-Einstellwerkes das Gewicht der Membrananordnung und des Verhältnis-Einstellwerkes ausgleicht, und ist zu diesem Zweck mittels eines durch einen Keil 71 verstellbaren Widerlagers 72 einstellbar. Einzeldaten dieser Justiereinrichtung sind in unserer gleichrangigen DE-A-34 43 532.8 mit dem Titel "Gas/Luft-Verbundregler" beschrieben.

Das Steuerventil 60 befindet sich zwischen Anschlüssen 62, 63, an die ein Servosystem zur Steuerung eines Drosselventils in der Gaszuleitung anschließbar ist. Dieses für Normalbedingungen eingestellte Gas/Luft-Verhältnis kann dann durch Verschieben des zweiten Widerlagers 34 in weiten Grenzen geändert werden, ohne dadurch die Grundeinstellung zu beeinflussen. Das Verschieben des zweiten Widerlagers 34 erfolgt mittels des von dem Elektromotor 52 gebildeten motorischen Antriebes in Abhängigkeit von Steuersignalen, die dem Elektromotor in der oben beschriebenen Weise von einem Steuergerät zugeführt werden. Dabei kann es sich je nach der Art der beobachteten Größe, von der die Verstellung des Gas/Luft-Verhältnisses abhängig gemacht worden ist, um einen Steuervorgang oder um eine Regelung handeln. Da im Falle einer Steuerung die Rückwirkung auf eine zu regelnde Größe fehlt, kann es erforderlich sein, das Ausmaß der in Abhängigkeit von der erfaßten Betriebsgröße vorgenommenen Verstellung zu überwachen. Diesem Zweck dient das Potentiometer 56, dessen Stellung die Größe eines elektrischen Ausgangssignales bestimmt, welches für die Stellung des motorisch verschiebbaren Widerlagers 34 charakteristisch ist.

**Patentansprüche**

1. Gas/Luft-Verbundregler für eine Gasfeuerungsanlage mit einem an Gas- und Luftzuleitungen angeschlossenen Brenner, welcher Gas/Luft-Verbundregler zwei Membran-Druckmesser (6-7) von denen der eine mit der Gaszuleitung und der andere mit der Luftzuleitung verbunden ist, und ein Verhältnis-Einstellwerk (17) umfaßt, das zwei in einer gemeinsamen Ebene im wesentlichen parallel zueinander angeordnete Hebel (9, 11) aufweist, die mit je einer Membran (7, 6) der Druckmesser in Antriebsverbindung stehen und miteinander über ein in Längsrichtung der Hebel verschiebbares Widerlager (12) gekoppelt sind, dessen Stellung ein vorgegebenes Gas/Luft-Verhältnis bestimmt, wobei das verschiebbare Widerlager (12) mit einem motorischen Antrieb (20) versehen ist, der mit einem auf eine das optimale Gas/Luft-Verhältnis beeinflussende Betriebsgröße ansprechenden Sensor (18) gekoppelt ist und eine durch die erfaßte Betriebsgröße bestimmte Veränderung der Stellung des Widerlagers bewirkt, dadurch gekennzeichnet, daß die beiden Hebel (9, 11) mit Bezug auf ihre Schwenkpunkte gleichgerichtet sind und zwischen ihnen ein dritter, zu den beiden Hebeln (9, 11) wiederum im wesentlichen paralleler, aber in Bezug auf seinen Schwenkpunkt entgegengesetzt gerichteter Zwischenhebel (33) angeordnet ist, der mit den benachbarten Hebeln (9, 11) durch je ein in Längsrichtung der Hebel verschiebbares Widerlager (34, 35) gekoppelt ist, von denen das eine Widerlager (35) fest einstellbar und das andere Widerlager (34) mit dem motorischen Antrieb (52, 53, 54) versehen ist.

2. Gas/Luft-Verbundregler nach Anspruch 1, dadurch gekennzeichnet, daß das fest einstellbare Widerlager (35) an einem auf einem der Hebel (11) verschiebbar gelagerten Schlitten (37) angebracht ist, der mit einer parallel zum Hebel gelagerten Schraubspindel (38) in Eingriff steht.

3. Gas/Luft-Verbundregler nach Anspruch 1, dadurch gekennzeichnet, daß das mit dem motorischen Antrieb (52, 53, 54) versehene Widerlager (34) am Ende eines Armes angebracht ist, der an einem in Längsrichtung des Armes (45) verschiebbar gelagerten Stellglied (50) schwenkbar gelagert ist.

4. Gas/Luft-Verbundregler nach Anspruch 3, dadurch gekennzeichnet, daß das Stellglied (50) von einer verschiebbar gelagerten Zahnstange gebildet wird, mit der das Abtriebsritzel (53) eines Elektromotors (52) in Eingriff steht.

5. Gas/Luft-Verbundregler nach Anspruch 3 oder 4, dadurch gekennzeichnet, daß mit dem Stellglied (50) ein Stellungsgeber (56) verbunden ist.

6. Gas/Luft-Verbundregler nach Anspruch 4, dadurch gekennzeichnet, daß mit der Zahnstange (50) ein auf der Welle eines Potentiometers (56) befestigtes Zahnrad (55) in Eingriff steht.

7. Gas/Luft-Verbundregler nach einem der vorhergehenden Ansprüche, dadurch gekennzeichnet, daß der Zwischenhebel (33) gabelförmig ausgebildet ist und neben den benachbarten Hebeln (9, 11) liegende Schenkel aufweist, an denen sich die seitlich der Hebel angeordneten Widerlager (34, 35) abstützen.

8. Gas/Luft-Verbundregler nach einem der vorhergehenden Ansprüche, dadurch gekennzeichnet, daß die Widerlager (34, 35) von drehbar gelagerten Rollen gebildet werden.

9. Gas/Luft-Verbundregler nach einem der vorhergehenden Ansprüche, dadurch gekennzeichnet, daß wenigstens einer der Hebel (9) um eine zu seiner Längsrichtung im wesentlichen parallelen Achse schwenkbar gelagert ist.

## Revendications

1. Régulateur du rapport gaz/air destiné à une installation de chauffage au gaz comprenant un brûleur raccordé à des conduites d'alimentation de gaz et d'air, lequel comprend deux manomètres à membrane (6, 7), dont l'un est relié à la conduite d'alimentation de gaz et l'autre à la conduite d'alimentation d'air, et un dispositif de mise au point du rapport (17), qui présente deux leviers (9, 11), qui sont agencés de manière sensiblement parallèle l'un par rapport à l'autre dans un plan commun, qui sont en liaison d'entraînement avec chaque fois une membrane (7, 6) du manomètre et qui sont couplés l'un à l'autre par l'intermédiaire d'un contre-appui (12), qui est déplaçable suivant la direction longitudinale du levier et dont la position détermine un rapport gaz/air prédéterminé, le contre-appui déplaçable (12) étant pourvu d'un élément d'entraînement moteur (20), qui est couplé à un capteur (18) sensible à une grandeur de service influençant le rapport gaz/air optimal et qui entraîne un changement de position du contre-appui qui est déterminé par la grandeur de service enregistrée, caractérisé en ce que les deux leviers (9, 11) sont orientés de même par rapport à leur point de pivotement et en ce que, entre ceux-ci, est agencé un troisième levier intermédiaire (33), qui est à nouveau sensiblement parallèle aux deux leviers (9, 11) mais qui est orienté de manière opposée par rapport à son point de pivotement, qui est couplé aux leviers adjacents (9, 11) par chaque fois un contre-appui (34, 35) déplaçable suivant la direction longitudinale des leviers, dont l'un des contre-appuis (35) peut être réglé de manière fixe et l'autre contre-appui (34) est pourvu de l'élément d'entraînement moteur (52, 53, 54).

2. Régulateur du rapport gaz/air suivant la revendication 1, caractérisé en ce que le contre-appui pouvant être réglé de manière fixe (35) est appliqué sur un chariot (37), qui est supporté de manière déplaçable sur l'un des leviers (11) et qui est en prise avec une tige filetée (38) qui est supportée parallèlement au levier.

3. Régulateur du rapport gaz/air suivant la revendication 1, caractérisé en ce que le contre-appui (34), qui est pourvu de l'élément d'entraînement moteur (52, 53, 54), est appliqué sur l'extrémité d'un bras qui est supporté de manière à pouvoir pivoter sur un élément de réglage (50) qui est supporté de manière déplaçable suivant la direction longitudinale du bras (45).

4. Régulateur du rapport gaz/air suivant la revendication 3, caractérisé en ce que l'élément de réglage (50) est formé par une tige dentée, qui est supportée de manière déplaçable et avec laquelle le pignon d'entraînement (53) d'un moteur électrique (52) est en prise.

5. Régulateur du rapport gaz/air suivant la revendication 3 ou 4, caractérisé en ce qu'un transmetteur de position (56) est relié à l'élément de réglage (50).

6. Régulateur du rapport gaz/air suivant la revendication 4, caractérisé en ce qu'une roue dentée (55), qui est fixée sur l'arbre d'un potentiomètre (56), est en prise avec la tige dentée (50).

7. Régulateur du rapport gaz/air suivant l'une des revendications précédentes, caractérisé en ce que le levier intermédiaire (33) est réalisé en forme de fourche et qu'il présente des branches situées à côté des leviers adjacents (9, 11), sur lesquelles les contre-appuis (34, 35), qui sont agencés latéralement aux leviers, sont en appui.

8. Régulateur du rapport gaz/air suivant l'une des revendications précédentes, caractérisé en ce que les contre-appuis (34, 35) sont formés par des rouleaux supportés de manière à pouvoir tourner.

9. Régulateur du rapport gaz/air suivant l'une des revendications précédentes, caractérisé en ce que au moins l'un des leviers (9) est supporté de manière à pouvoir pivoter autour d'un axe sensiblement parallèle à sa direction longitudinale.

## Claims

1. A gas/air coupled controller for a gas firing installation with, connected to gas and air supply lines, a burner, the said gas/air coupled controller comprising two diaphragm pressure gauges (6, 7), of which one is connected to the gas supply line while the other is connected to the air supply line, and a proportional setting mechanism (17) having, disposed in a common plane and substantially parallel with each other, two levers (9, 11), each of which is in powered communication with a respective diaphragm (7, 6) of the pressure gauges, being coupled to each other by an abutment (12) which is displaceable in the longitudinal direction of the levers and the position of which determines a given ratio of gas to air, the displaceable abutment (12) being provided with a motorised drive (20) coupled to a sensor (18) which responds to an operating variable which influences the optimum gas/air ratio, producing a variation in the position of the abutment as determined by the operating variable detected, characterised in that with regard to their centres of gravity, the two levers (9, 11) are identically oriented and in that between them there is substantially parallel with the two levers (9, 11) but oppositely directed in terms of its centre of gravity, a third intermediate lever (33) coupled to the adjacent levers (9, 11) by in each case an abutment (34, 35) which is displaceable in the longitudinal direction of the lever and of which one abutment (35) is rigidly adjustable while the other abutment (34) is provided with the motorised drive (52, 53, 54).

2. A gas/air coupled controller according to Claim 1, characterised in that the rigidly adjustable abutment (35) is mounted on a slide (37) mounted for displacement on one of the levers (11) and in engagement with a screwed spindle (38) mounted parallel with the lever.

3. A gas/air coupled controller according to Claim 1, characterised in that the abutment (34) provided with the motorised drive (52, 53, 54) is mounted on the end of an arm which is pivotally mounted on a positioning member (50) mounted for displacement in the longitudinal direction of the arm (45).

4. A gas/air coupled controller according to Claim 3, characterised in that the positioning member (50) consists of a displaceably mounted rack with which the output pinion (53) of an electric motor (52) is engaged.

5. A gas/air coupled controller according to Claim 3 or 4, characterised in that a position transmitter (56) is connected to the positioning member (50).

6. A gas/air coupled controller according to Claim 4, characterised in that a gearwheel (55) mounted on the shaft of a potentiometer (56) engages the rack (50).

7. A gas/air coupled controller according to one of the preceding Claims, characterised in that the intermediate lever (33) is bifurcated and has beside the adjacent levers (9, 11) arms on which are braced the abutments (34, 35) disposed laterally of the lever.

8. A gas/air coupled controller according to one of the preceding Claims, characterised in that the abutments (34, 35) consist of rotatably mounted rollers.

9. A gas/air coupled controller according to one of the preceding Claims, characterised in that at least one of the levers (9) is mounted to pivot about an axis which is substantially parallel with its longitudinal direction.

Fig. 1

Fig 2

EP 0 183 157 B1

Fig. 3

Fig. 5

Fig. 6

Fig. 4